**Europäisches Patentamt**

**European Patent Office**

**Office européen des brevets**

(11) Veröffentlichungsnummer: **0 309 595**
**B1**

(12) **EUROPÄISCHE PATENTSCHRIFT**

(45) Veröffentlichungstag der Patentschrift:
01.08.90

(21) Anmeldenummer: 87113960.6

(22) Anmeldetag: 24.09.87

(51) Int. Cl.⁵: **B05D 1/06**, B05D 1/24

(54) Verfahren zur Herstellung von Formteilen.

(43) Veröffentlichungstag der Anmeldung:
05.04.89 Patentblatt 89/14

(45) Bekanntmachung des Hinweises auf die Patenterteilung:
01.08.90 Patentblatt 90/31

(84) Benannte Vertragsstaaten:
AT BE CH DE ES FR GB IT LI NL SE

(56) Entgegenhaltungen:
FR-A- 2 429 620
GB-A- 842 950

(73) Patentinhaber: **Casimir Kast GmbH & Co. KG,**
**Obertsroterstrasse 2, D-7562 Gernsbach(DE)**

(72) Erfinder: **Wellmann-Stolculet, George, Dipl.-Ing. (TU),**
**Frühlingstrasse 32, D-7560 Gaggenau 16(DE)**

(74) Vertreter: **Dr.-Ing. Hans Lichti Dipl.-Ing. Heiner Lichti**
**Dipl.-Phys. Dr. Jost Lempert,**
**Postfach 41 07 60 Durlacher Strasse 31,**
**D-7500 Karlsruhe 41(DE)**

ACTORUM AG

## Beschreibung

Die Erfindung betrifft ein Verfahren zur Herstellung von Formteilen aus Faserwerkstoffen, indem aus einer Fasermatte, in der die Fasern, die noch eine Restfeuchte aufweisen, mit thermoplastischen und/oder duroplastischen Bindemitteln gemischt sind, durch Formpressen bei erhöhter Temperatur ein geformtes Rohteil hergestellt und dieses anschließend mit einem Kunststoff beschichtet wird.

Formteile der vorgenannten Art werden beispielsweise zur Verkleidung von KFZ-Innenräumen in Form von Türverkleidungen etc., als Hutablagen, Armaturenbrett-Verkleidung und dgl. eingesetzt. Je nach Einsatzzweck werden solche Formteile mit Dekorfolien aus Kunststoff, mit textilen Belägen oder dgl. versehen, die mittels Kunststoffklebern mit dem Formteil verbunden werden. Häufig werde solche Formteile auch nur mit Kunstharzlacken beschichtet oder nur bereichsweise mit Kunststoffklebern versehen, um sie mit technischen Teilen, z.B. sogenannten Retainern (Befestigungselemente) zu versehen.

Die Herstellung solcher Formteile erfolgt in der Regel aus preisgünstigen Faserwerkstoffen, die unter Zugabe von Bindemitteln gemischt, zu Vliesen ausgestreut und anschließend zu Matten vorverdichtet werden. Aus der vorverdichteten Matte bzw. einem Mattenzuschnitt wird dann das Rohteil zwischen heißen Preßwerkzeugen mit einer dem Formteil entsprechenden Kontur im Unter- und Oberwerkzeug hergestellt. Dabei werden die Bindemittel aktiviert und ein fester und dichter Faserverbund bei zugleich glatter Oberfläche erhalten.

Für das Konfektionieren mit einer äußeren Dekorschicht wird das Rohteil anschließend auf seiner Oberfläche lackiert oder mit einem Kleber versehen, wobei in der Regel gelöste Kleber oder Dispersionskleber eingesetzt werden. Der Lack oder Kleber wird durch Sprühen, Tauchen oder Streichen aufgebracht. Zusätzlich oder statt dessen kann auch die innenliegende Seite der Dekorschicht mit einem solchen Kleber versehen werden. Lösungsmittelhaltige Kleber und Dispersionskleber, wie auch Lacke haben den Nachteil, daß in der Regel gesundheitsgefährdende Dämpfe entstehen, die entsprechende Abluftanlagen erfordern. Auch müssen bei vielen Klebern Topfzeiten eingehalten werden, die den Verfahrensablauf einengen. In allen Fällen kommt es zu relativ hohen Spritzverlusten.

Es hat deshalb nicht an Versuchen gefehlt, Schmelzkleber einzusetzen, die in fester Form verarbeitungsfähig sind und lediglich thermisch aktiviert werden. Solche Schmelzkleber werden in Form von Folien, Netzen oder als Granulat eingesetzt oder aber der Schmelzkleber aus der Schmelze in flüssiger Form aufgesprüht. Im letztgenannten Fall entstehen wiederum Arbeitsplatzrisiken und Spritzverluste. Auch bei Lacken ist an sich das Aufbringen aus der festen Phase, z.B. in Form von Pulverlacken wünschenswert.

Das Aufbringen von Folien, Netzen oder dgl. erfordert in der Regel ein vorheriges Aufbringen auf die Dekorschicht. Ferner muß das Trägermaterial vorgewärmt werden und zwar auf eine weit höhere Temperatur als die Schmelztemperatur, um nach dem Zusammenführen mit dem kalten Dekormaterial noch die nötige Verflüssigung des Klebers zu erreichen, bevor in dem gekühlten oder temperierten Kaschierwerkzeug der Kleber unter Druck aushärtet.

Es ist bisher nicht gelungen, ohne Zuhilfenahme von Haftvermittlern oder anderen Klebern, Schmelzkleber in einer gleichmäßigen Schicht und mit entsprechender Haftung auf das Rohteil aus Faserstoff aufzubringen. Andererseits ist das Aufbringen der Kleberschicht auf das Rohteil in den meisten Fällen bevorzugt, da das mechanische Verankern an dem Rohteil verbessert wird.

Die hier zur Rede stehenden Formteile bzw. Rohteile sind an sich elektrische Isolatoren und werden in bestimmter Modifikation sogar in dieser Form eingesetzt. Sie lassen sich deshalb auch nicht elektrostatisch beschichten. Es wäre zwar denkbar, die Rohteile oder aber den Faserwerkstoff – wie auf anderen technischen Gebieten bekannt – mit einem leitfähigen Substrat, z.B. eingebetteten leitfähigen Partikeln, leitfähigen Anstrichen oder dgl. zu versehen, doch kommt diese Technologie hier nicht in Frage, weil im Falle einer späteren Kaschierung die Kaschierfolien in der Regel miteinander verschweißt werden müssen, was heute zumeist mittels Hochfrequenz geschieht. Dies wäre nicht möglich, wenn das Rohteil leitfähige Substrate enthält.

Bei Werkstücken aus Isolierstoff, z.B. aus Kunststoff oder Formpreßstoff, ist es bekannt (FR-A 2 429 620 = DE-A 2 914 733), dem Isolierstoff ein antistatisches Mittel beizumischen oder auf den Isolierstoff aufzubringen. Im erstgenannten Fall wird der Isolierstoff aufgewärmt, um das Mittel an die Oberfläche diffundieren zu lassen. Das Beschichtungsmaterial wird in noch warmem Zustand des Isolierstoffs elektrostatisch aufgebracht. Dies gilt auch für den Fall des nur oberflächigen Autragens des Mittels.

Dieses bekannte Verfahren erfordert mit dem Einbringen bzw. Aufbringen des antistatischen Mittels einen zusätzlichen Arbeitsgang und dem Isolierstoff wird ein Additiv mit chemischen Komponenten zugegeben, die beim Ausdiffundieren zu Umweltbelastungen führen und chemisch auf die Komponenten des Isolierstoffs und des Beschichtungsmaterials abgestimmt sein müssen, um Unverträglichkeiten zwischen diesen, z.B. durch chemische oder physikalische Wechselwirkungen, zu vermeiden.

Der Erfindung liegt die Aufgabe zugrunde, ein Verfahren vorzuschlagen mit dessen Hilfe das Rohteil aus Faserwerkstoff mit einem Kunststoff, z.B. einem Schmelzkleber, einem Lack oder dgl., versehen werden kann und der Kunststoff in regelmäßiger Verteilung auf der Rohteil-Oberfläche fest haftet.

Diese Aufgabe wird erfindungsgemäß dadurch gelöst, daß das Rohteil nach dem Formpressen in noch heißem Zustand mit in Pulverform elektrostatisch aufgebrachtem Kunststoff beschichtet wird. Vorzugsweise geschieht die Beschichtung unmittelbar nach dem Formpressen in noch presswarmem Zustand.

Praktische Versuche haben überraschend gezeigt, daß das heiße, gegebenenfalls noch preßwarme Rohteil zumindest an seiner Oberfläche einen noch ausreichenden Feuchtegehalt aufzuweisen scheint, um die für eine elektrostatische Beschichtung notwendige Leitfähigkeit zu bieten. Die tatsächlichen Hintergründe hierfür sind noch nicht restlos aufgeklärt, so daß nur folgens des vermutet werden kann: Die hier eingesetzten Fasern weisen eine gewisse Restfeuchte auf. Auch werden die vorgefertigten Fasermatten häufig geringfügig angefeuchtet, um ihre Verformbarkeit zu verbessern. Schließlich ist davon auszugehen, daß beim Aktivieren der Bindemittel für die Fasern in der Heißpresse feuchte Dämpfe, gegebenenfalls organischer Natur, entstehen. Es werden erfindungsgemäß also werkstoffeigene Komponenten an die Oberfläche transportiert, um diese ausreichend leitfähig zu machen.

Praktische Versuche haben gezeigt, daß sich mit dem erfindungsgemäßen Verfahren Rohteile beliebiger Kontur in einwandfreier Weise mit pulverförmigen Schmelzklebern oder Pulverharzen beschichten lassen. Das Pulver wird regelmäßig über die Oberfläche verteilt. Durch die im Formteil noch gespeicherte Hitze wird das Pulverkorn zumindest so weit aufgeschmolzen, daß es mit der relativ rauhen Rohteil-Oberfläche eine innige Verbindung eingeht, die nach dem Erkalten des Rohteils erhalten bleibt. Es entsteht eine abriebfeste Beschichtung, die es gestattet, das Rohteil ohne besondere Vorsichtsmaßnahmen zu transportieren und zu lagern. Zum Kaschieren mit einer Dekorschicht, die gegebenenfalls innenseitig gleichfalls eine affine Kleberbeschichtung aufweist, muß der auf der Rohteil-Oberfläche haftende Schmelzkleber lediglich wieder aktiviert werden. Dies geschieht in der Regel mittels Heizfeldern.

Um das Anhaften des Schmelzklebers oder Pulverharzes am Rohteil zu verbessern bzw. bei nicht ausreichender Eigenwäre des Rohteils nach der Entnahme aus der Formpresse sicherzustellen, ist erfindungsgemäß weiterhin vorgesehen, daß das Rohteil während oder unmittelbar nach dem Beschichten mit dem Kunststoffpulver einer Temperaturerhöhung auf wenigstens der Aktivierungstemperatur des Kunststoffs ausgesetzt wird. Dies kann gegebenenfalls durch zusätzliche Beheizung des Rohteils von der Rückseite und/oder durch Erhitzung der Atmosphäre im elektrostatischen Feld oder aber durch Erhitzen des Formteils und/oder seiner Oberfläche nach dem elektrostatischen Beschichten geschehen. Im übrigen kann die elektrostatische Aufladung tribologisch und/oder im elektrostatischen Feld erfolgen.

In weiterer vorteilhafter Ausgestaltung des erfindungsgemäßen Verfahrens wird das Rohteil unmittelbar nach dem Formpressen einem Fördermittel übergeben und von diesem nacheinander durch ein elektrostatisches Feld zur Pulverbeschichtung mit dem Kunststoff, z.B. dem Schmelzkleber oder Pulverharz und anschließend durch ein Temperaturfeld zum weiteren Aktivieren des Kunststoffs transportiert.

Auf die vorgenannte Weise ist es möglich, den Kunststoff entlang eines kontinuierlich laufenden Transportmittels aufzubringen. Es läßt sich ferner die elektrostatische Beschichtung in einem unmittelbar hinter der Formpresse beginnenden und beispielsweise bis zu einer Kaschierstation reichenden Förderstrecke integrieren, so daß im günstigsten Fall, die Restwärme der gepreßten Teile zum Ansintern des Klebers und zum Kaschieren ausreicht.

Das Verfahren läßt sich mit allen schmelzbaren Kunststoffpulvern durchführen, sei es zum Aufbringen von Schmelzklebern, Pulverharzlacken oder auch nur zur Oberflächenverfestigung und/oder -egalisierung der Rohteile.

Zur Durchführung des Verfahrens können herkömmliche elektrostatische Beschichtungsanlagen und – soweit notwendig – Wärmestrahler eingesetzt werden.

**Patentansprüche**

1. Verfahren zur Herstellung von Formteilen aus Faserwerkstoffen, indem aus einer Fasermatte, in der die Fasern, die noch eine Restfeuchte aufweisen, mit thermoplastischen und/oder duroplastischen Bindemitteln gemischt sind, durch Formpressen bei erhöhter Temperatur ein geformtes Rohteil hergestellt und dieses anschließend mit einem Kunststoff beschichtet wird, dadurch gekennzeichnet, daß das Rohteil nach dem Formpressen in noch heißem Zustand mit in Pulverform elektrostatisch aufgebrachtem Kunststoff beschichtet wird.

2. Verfahren nach Anspruch 1, dadurch gekennzeichnet, daß das Rohteil unmittelbar nach dem Formpressen in noch preßwarmem Zustand beschichtet wird.

3. Verfahren nach Anspruch 1 oder 2, dadurch gekennzeichnet, daß das Rohteil unmittelbar nach dem Beschichten mit dem Kunststoffpulver einer Temperaturerhöhung auf wenigstens der Aktivierungstemperatur des Kunststoffs ausgesetzt wird.

4. Verfahren nach einem der Ansprüche 1 bis 3, dadurch gekennzeichnet, daß das Kunststoffpulver tribologisch und/oder im elektrostatischen Feld aufgeladen wird.

5. Verfahren nach einem der Ansprüche 1 bis 4, dadurch gekennzeichnet, daß das Rohteil unmittelbar nach dem Formpressen einem Fördermittel übergeben und von diesem nacheinander durch ein elektrostatisches Feld zur Pulverbeschichtung mit dem Kunststoff und anschließend durch ein Temperaturfeld zum weiteren Aktivieren des Kunststoffs transportiert wird.

6. Verfahren nach einem der Ansprüche 1 bis 5, dadurch gekennzeichnet, daß als Kunststoff ein Schmelzkleber verwendet wird.

**Claims**

1. Method for producing mouldings from fibrous materials, in that from a fibrous mat in which the fibres still having a residual moisture content are mixed with thermoplastic and/or thermosetting binders, a shaped blank is produced by compression moulding at elevated temperature and is subsequently coated with a plastic, characterized in that after compression moulding, the blank in the still hot state is coated with plastic applied electrostatically in powder form.

2. Method according to claim 1, characterized in that, immediately following compression moulding, the blank is coated in the still mould-hot state.

3. Method according to claims 1 or 2, characterized in that, immediately after coating with the plastic powder, the blank is exposed to a temperature rise to at least the activation temperature of the plastic.

4. Method according to one of the claims 1 to 3, characterized in that the plastic powder is charged tribologically and/or in the electrostatic field.

5. Method according to one of the claims 1 to 4, characterized in that, immediately following compression moulding, the blank is transferred to a conveying means and is successively conveyed by the latter through an electrostatic field for powder coating with the plastic and then through a temperature field for the further activation of the plastic.

6. Method according to one of the claims 1 to 5, characterized in that a hot-melt adhesive is used as the plastic.

**Revendications**

1. Pricédé pour la fabrication d'objets formés en matériaux fibreux, dans lequel on prépare une ébauche formée par formage sous presse à température élevée à partir d'un matelas de fibres dans lequel les fibres, qui comportent encore un reste d'humidité, sont mélangées avec des liants thermoplastiques et/ou thermodurcissables et on recouvre ensuite cette ébauche d'une matière synthétique, caractérisé en ce que l'ébauche, à l'état encore chaud après le formage sous pression, est recouverte de matière plastique appliquée par voie électrostatique sous forme de poudre.

2. Procédé selon la revendication 1, caractérisé en ce que l'ébauche est recouverte immédiatement après le formage sous presse à l'état encore chauffé par la presse.

3. Procédé selon l'une des revendications 1 et 2, caractérisé en ce que l'ébauche, immédiatement après son recouvrement par la poudre de matière synthétique, est soumise à une élévation de température au moins à la température d'activation de la matière synthétique.

4. Procédé selon l'une des revendications 1 à 3, caractérisé en ce que la poudre de matière plastique est chargée par tribologie et/ou dans un champ électrostatique.

5. Procédé selon l'une des revendications 1 à 4, caractérisé en ce que l'ébauche, immédiatement après formage sous presse, est transmise à un dispositif de transport et transportée par celui-ci successivement à travers un champ électrostatique pour le recouvrement de poudre de matière synthétique et ensuite à travers un champ de température pour la poursuite de l'activation de la matière synthétique.

6. Procédé selon l'une des revendications 1 à 5, caractérisé en ce qu'on utilise comme matière synthétique une colle thermofusible.